(19) Europäisches Patentamt
European Patent Office
Office européen des brevets

(11) EP 4 674 910 A1

(12) EUROPEAN PATENT APPLICATION
published in accordance with Art. 153(4) EPC

(43) Date of publication:
**07.01.2026 Bulletin 2026/02**

(21) Application number: **24764009.7**

(22) Date of filing: **29.02.2024**

(51) International Patent Classification (IPC):
***C08L 29/04*** *(2006.01)*

(52) Cooperative Patent Classification (CPC):
**C08L 29/04**

(86) International application number:
**PCT/JP2024/007544**

(87) International publication number:
**WO 2024/181532 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2023 JP 2023031104**

(71) Applicant: **Kuraray Co., Ltd.**
**Kurashiki-shi, Okayama 710-0801 (JP)**

(72) Inventors:
- **SEKI, Michinari**
  **Kurashiki-shi, Okayama 713-8550 (JP)**
- **IMAOKA, Yoriko**
  **Kurashiki-shi, Okayama 713-8550 (JP)**
- **OKAMOTO, Yuji**
  **10500 Bangkok (TH)**

(74) Representative: **Müller-Boré & Partner Patentanwälte PartG mbB**
**Friedenheimer Brücke 21**
**80639 München (DE)**

# (54) COMPOSITION COMPRISING VINYL ALCOHOL-BASED POLYMER, AND METHOD FOR SEPARATING VINYL ALCOHOL-BASED POLYMER

(57) Provided is a composition containing a vinyl alcohol polymer, wherein in a case in which an aqueous solution thereof is prepared, the aqueous solution is homogeneous and the vinyl alcohol polymer contained in the aqueous solution is easily separable. The composition contains: a vinyl alcohol polymer (A) that exhibits a retention time RT of a peak top of 22 min or more, as measured on reversed-phase partition gradient high-performance liquid chromatography with a water-ethanol eluent; and a compound (B), wherein the compound (B) is represented by formula (1). In the formula (1), X represents an oxygen atom or the like; Y represents an atomic group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group.

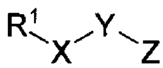 (1)

EP 4 674 910 A1

## Description

[TECHNICAL FIELD]

The present invention relates to a composition containing a vinyl alcohol polymer, and a method for separating a vinyl alcohol polymer.

[BACKGROUND ART]

Polyvinyl alcohol polymers (hereinafter, may be referred to as "PVAs") are widely used as materials and the like for thickening agents, paper coating agents, adhesives, fiber coating agents, binders, emulsion stabilizers, films, fibers, and the like. In use for such intended usages, the PVA may be used in a state of an aqueous solution containing the PVA dissolved in water. This aqueous PVA solution is, in general, often prepared by mixing the PVA with water followed by heating.
However, in cases of highly hydrophobic PVAs, dissolution in water usually fails by this process, and addition of an anionic surfactant is known to enable preparation of the aqueous solution (Patent Document 1). Formation of a complex of the highly hydrophobic PVA and the anionic surfactant in water results in successful preparation (Nonpatent Document 1).

[PRIOR ART DOCUMENTS]

[Patent Documents]

Patent Document 1: Japanese Unexamined Patent Application, Publication No. S53-133252

[Nonpatent Documents]

Nonpatent Document 1: "Complexes of Polymers and Surfactants," Journal of Oleo Science, 1963, Vol. 12, No. 3, pp. 133-141, attributed to Shuji SAITO

[SUMMARY OF THE INVENTION]

[Problems to be Solved by the Invention]

However, a composition containing a PVA has not been known, which enables the PVA to be easily separated and extracted from an aqueous PVA solution thereof once produced. One object of the present invention is to provide a composition containing a PVA, wherein in a case in which an aqueous solution thereof is prepared, the aqueous solution is homogeneous and the PVA contained in the aqueous solution is easily separable. Furthermore, another object of the present invention is to provide a method for separating a PVA. It is to be noted that the phrase the "aqueous solution is homogeneous" may mean a state in which the PVA is homogeneously dissolved.

[Means for Solving the Problems]

The present inventors thoroughly investigated in order to solve the foregoing problems, and consequently found that a composition containing a certain PVA and a compound having a certain structure solves the problems, whereby the present invention was completed.
Accordingly, the present invention relates to:

(1) A composition containing: a vinyl alcohol polymer (A) that exhibits a retention time RT of a peak top of 22 min or more, as measured on reversed-phase partition gradient high-performance liquid chromatography with a water-ethanol eluent; and a compound (B), wherein the compound (B) is a compound represented by formula (1):

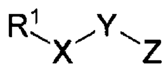
(1)

wherein,
in the formula (1), X represents an oxygen atom, a group represented by formula (2), or a group represented by formula (3); Y represents an atomic group having 1 to 10 carbon atoms; Z represents one selected from the group consisting of a carboxy group, a sulfo group, a phosphoric acid group, a salt thereof, and an anion thereof; and $R^1$

represents an acyl group or a hydrocarbon group,

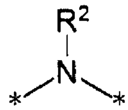 (2)

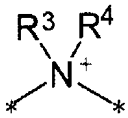 (3)

in the formula (2) and the formula (3), $R^2$, $R^3$, and $R^4$ each independently represent a hydrogen atom, an alkyl group having 1 to 3 carbon atoms, or an atomic bonding that bonds to Y; and * denotes an atomic bonding;

(2) The composition according to (1), wherein as for the compound (B), Z in the formula (1) represents a carboxy group, a salt of a carboxy group, or an anion of a carboxy group;

(3) The composition according to (1) or (2), wherein as for the compound (B), X in the formula (1) represents a group represented by the formula (2), and $R^1$ represents an acyl group;

(4) The composition according to any one of (1) to (3), wherein the compound (B) is at least one selected from the group consisting of an N-acyl amino acid salt and an acyl lactic acid salt;

(5) The composition according to (4), wherein the compound (B) is the N-acyl amino acid salt;

(6) The composition according to (5), wherein the N-acyl amino acid salt has an acyl group derived from a saturated or unsaturated fatty acid having 8 to 20 carbon atoms;

(7) The composition according to any one of (1) to (6), wherein in the compound (B), $R^1$ represents a group represented by formula (4):

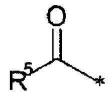 (4)

wherein, in the formula (4), $R^5$ represents a saturated or unsaturated hydrocarbon group having 7 to 20 carbon atoms which may have a substituent; and * denotes an atomic bonding;

(8) The composition according to any one of (1) to (7), wherein the vinyl alcohol polymer (A) has a degree of saponification of 20 mol% or more and 70 mol% or less;

(9) The composition according to any one of (1) to (8), wherein the vinyl alcohol polymer (A) consists only of a monomer unit derived from vinyl acetate;

(10) The composition according to any one of (1) to (9), which is at least one selected from the group consisting of a composition for agricultural supplies, a composition for automotive supplies, a composition for aeronautical supplies, a composition for industrial supplies, a composition for livestock supplies, a composition for marine supplies, a pharmaceutical composition, a composition for personal care goods, a composition for recreational goods, and a composition for water treatment agents;

(11) The composition according to any one of (1) to (10), which is an aqueous solution further containing water; and

(12) A method for separating a vinyl alcohol polymer, the method including:

adjusting a pH of the composition according to (11) to precipitate at least a part of the vinyl alcohol polymer (A) contained in the composition.

[Effects of the Invention]

In a case in which an aqueous solution is prepared from the composition of the present invention, the aqueous solution is homogeneous and the PVA contained in the aqueous solution is easily separable.

[DESCRIPTION OF EMBODIMENTS]

Hereinafter, preferred embodiments for carrying out the present invention will be descried in detail. It is to be noted that the scope of the present invention is not limited to the embodiments described herein, and these can be variously changed within the scope not leading to impairment of principles of the present invention.

Composition

The composition of the present invention is a composition containing: a vinyl alcohol polymer (A) that exhibits a retention time RT of a peak top of 22 min or more, as measured on reversed-phase partition gradient high-performance liquid chromatography with a water-ethanol eluent (hereinafter, may be referred to as "PVA (A)"); and a compound (B), wherein the compound (B) is a compound represented by formula (1).

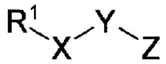 (1)

In the formula (1), X represents an oxygen atom, a group represented by the following formula (2), or a group represented by the following formula (3); Y represents an atomic group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group.

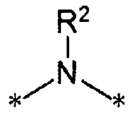 (2)

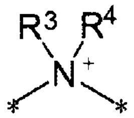 (3)

In the formula (2) and the formula (3), $R^2$, $R^3$, and $R^4$ each independently represent a hydrogen atom, an alkyl group having 1 to 3 carbon atoms, or an atomic bonding that bonds to Y; and * denotes an atomic bonding. In a case in which $R^2$, $R^3$ or $R^4$ represents an atomic bonding that bonds to Y, X and Y form a ring structure.

A ratio of the PVA (A) to the compound (B), each contained in the composition, i.e., (A):(B) in terms of mass ratio, is preferably 99.9:0.1 to 80:20, may be 99:1 to 85:15, or may be 97:3 to 90:10. Alternatively, (A):(B) may be preferably 50:50 to 0.1:99.9. When (A):(B) falls within the above range, for example, in producing the aqueous solution of the PVA (A) of a high concentration such as 30% by mass, more homogeneous solution can be obtained.

A suitable method for producing the composition is not particularly limited, and as long as the PVA (A) and the compound (B) can be mixed, production of the composition is enabled by employing an arbitrary method. For example, the PVA (A) and the compound (B) may be directly mixed; the compound (B) may be added to a solution containing the PVA (A); the PVA (A) may be added to a solution containing the compound (B); or a solution containing the PVA (A) and a solution containing the compound (B) may be mixed, whereby the composition may be produced. For example, by adding the compound (B) to an aqueous solution of the PVA (A), the composition of the present invention can be obtained.

Vinyl alcohol polymer (A)

The PVA (A) contained in the composition of the present invention is a polymer having a vinyl alcohol unit as a structural unit. The lower limit of a proportion of the vinyl alcohol unit with respect to total structural units in the PVA (A) is, for example, preferably 10 mol%, more preferably 20 mol%, still more preferably 30 mol%, and may be even more preferably 40 mol%. On the other hand, the upper limit of the proportion of the vinyl alcohol unit is, for example, preferably 90 mol%, more preferably 80 mol%, and may be still more preferably 60 mol%. The PVA (A) may be obtained by, for example, polymerizing a vinyl ester monomer, followed by saponifying a vinyl ester polymer thus obtained, and the PVA (A) may include, for example, a vinyl ester unit, in addition to the vinyl alcohol unit.

The PVA (A) exhibits a retention time RT of a peak top of 22 min or more, as measured on reversed-phase partition gradient high-performance liquid chromatography with a water-ethanol eluent. It is to be noted that the "peak top" as referred to herein is, in a chromatogram obtained by chromatographic determination, a point at which the detection strength is maximum and exhibits a maximal value; and the "peak top" means a peak top derived from the PVA (A). Such a PVA is poorly water soluble and is superior in separability from an aqueous solution. The PVA (A) exhibiting the retention time RT of more than 22 min is preferred. Furthermore, the PVA (A) exhibiting the retention time RT of 25 min or less is preferred, and the PVA (A) of 22 min < RT < 25 min is more preferred. The retention time RT of the PVA (A) can be adjusted by introducing a modifying group, or by regulating a degree of saponification and/or a viscosity-average degree of polymerization.

The retention time RT of the PVA (A) is measured under the following measurement conditions.

Measurement Conditions

column: Shimpack G-ODS (4) (manufactured by Shimadzu Corporation, octadecyl group-modified spherical fully porous silica gel; inner diameter of 4 mm × length of 10 mm; particle diameter: 5 μm)
column temperature: 45 °C
eluent: a liquid mixture of ion exchanged water (X) and ethanol (purity: 99.5%) (Y)
eluent constitution for each measurement time;

0 to 5 min: concentration of (Y) being 5% by volume, constant
5 to 25 min: concentration of (Y) being 5 to 100% by volume
25 to 40 min: concentration of (Y) being 100% by volume, constant
40 to 41 min: concentration of (Y) being 100 to 5% by volume
41 to 55 min: concentration of (Y) being 5% by volume, constant

(The concentration of (Y) from 5 min to 25 min is gradually increased from 5% by volume to 100% by volume at a substantially constant rate. The concentration of (Y) from 40 to 41 min is gradually decreased from 100% by volume to 5% by volume at a substantially constant rate.)

mobile phase flow rate: 0.4 mL/min
sample concentration: 5 mg/mL
detector: ELSD-LTII (manufactured by Shimadzu Corporation, drift tube temperature of 40 °C; gain 6 (= 32 times); $N_2$ gas primary spray pressure of 0.4 Mpa and secondary spray pressure of 0.35 Mpa; data acquisition interval of 1,000 m sec; filter: 1 sec.)
injection amount: 5 μL
length from injection to column inlet: 900 mm
length from column outlet to nebulizer of ELSD-LTII detector: 1,375 mm
pipe diameter: 0.3 mm ID

The lower limit of the degree of saponification of the PVA (A) is preferably 20 mol%, more preferably 30 mol%, still more preferably 40 mol%, and even more preferably 45 mol%. Further, the upper limit of the degree of saponification of the PVA (A) is preferably 90 mol%, more preferably 80 mol%, still more preferably 70 mol%, even more preferably 60 mol%, and particularly preferably 55 mol%. When the degree of saponification of the PVA (A) falls within the above range, separability from the aqueous solution may be more superior. The degree of saponification of the PVA (A) may be determined in accordance with a method disclosed in JIS K6726: 1994.

The lower limit of the viscosity-average degree of polymerization of the PVA (A) is preferably 100, and more preferably 200. Further, the upper limit of the viscosity-average degree of polymerization of the PVA (A) is preferably 3,500, more preferably 2,000, still more preferably 1,000, even more preferably 500, and particularly preferably 300. When the viscosity-average degree of polymerization of the PVA (A) falls within the above range, separability from the aqueous solution may be more superior. The viscosity-average degree of polymerization of the PVA (A) may be determined in accordance with JIS K6726: 1994.

The PVA (A) can be produced by, for example, saponifying a vinyl ester polymer obtained by polymerizing a vinyl ester monomer. Examples of the vinyl ester monomer include vinyl formate, vinyl acetate, vinyl propionate, vinyl valerate, vinyl caprate, vinyl laurate, vinyl stearate, vinyl benzoate, vinyl butyrate, vinyl isobutyrate, vinyl pivalate, vinyl versatate, vinyl caproate, vinyl caprylate, vinyl caprate, vinyl laurate, vinyl palmitate, vinyl stearate, vinyl oleate, and the like. Among these, in light of availability and economical efficiency, vinyl acetate is preferred. Only one type of the vinyl ester monomer may be used, or two or more types thereof may be used in combination.

The PVA (A) may be a polymer consisting only of a monomer unit derived from a vinyl ester monomer, or may be a polymer consisting only of a monomer unit derived from vinyl acetate. However, also in this case, a terminal structure of the PVA (A) may be a structure derived from, e.g., a polymerization initiator, a chain transfer agent, or the like, which is other than the vinyl ester monomer. The PVA (A) may be a polymer substantially consisting only of a monomer unit derived from a vinyl ester monomer, or may be a polymer substantially consisting only of a monomer unit derived from vinyl acetate. The monomer unit derived from a vinyl ester monomer may be a vinyl alcohol unit and a vinyl ester unit. The lower limit of a proportion of the monomer unit derived from a vinyl ester monomer with respect to the total structural units in the PVA (A) is, for example, preferably 90 mol%, and may be 95 mol%, 98 mol%, 99 mol%, 99.5 mol%, or 99.9 mol%. On the other hand, the upper limit of the proportion of the monomer unit derived from a vinyl ester monomer may be 100 mol%. It is to be noted that even when the proportion of the monomer unit derived from a vinyl ester monomer with respect to the total structural

units in the PVA (A) is 100 mol% as described above, the terminal structure of the PVA (A) may be a structure derived from one other than the vinyl ester monomer.

The PVA (A) may be a modified PVA obtained by introducing: a unit other than a unit derived from the vinyl ester monomer; or a functional group, by employing a procedure such as copolymerization, acetalization, esterification, or the like.

In the case in which the PVA (A) is a copolymerized and modified PVA, the copolymerized and modified PVA can be obtained by, for example, saponifying a vinyl ester copolymer obtained by copolymerizing a vinyl ester monomer with a monomer other than the vinyl ester monomer. As the monomer other than the vinyl ester monomer to be copolymerized with the vinyl ester monomer, any monomer which is copolymerizable with the vinyl ester monomer can be used. Examples of such other monomers include: α-olefins such as propylene, 1-butene, isobutene, pentene, 1-hexene, 1-octene, 1-dodecene, 1-hexadecene, and 1-octadecene; methacrylic acid; (meth)acrylic acid esters such as methyl (meth)acrylate, ethyl (meth)acrylate, n-propyl (meth)acrylate, isopropyl (meth)acrylate, n-butyl (meth)acrylate, 2-ethylhexyl (meth)acrylate, cyclohexyl (meth)acrylate, stearyl (meth)acrylate, and octadecyl (meth)acrylate; acrylamide derivatives such as N-methylacrylamide and N-ethylacrylamide; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, n-butyl vinyl ether, lauryl vinyl ether, and vinyl stearate ether; allyl acetate; allyl ethers such as propyl allyl ether, butyl allyl ether, and hexyl allyl ether; monomers each having an oxyalkylene group; isopropenyl acetate; monomers each having a silyl group such as vinylmethyldimethoxysilane, vinyldimethylmethoxysilane, vinyltriethoxysilane, vinylmethyldiethoxysilane, vinyldimethylethoxysilane, 3-(meth)acrylamidepropyltrimethoxysilane, and 3-(meth)acrylamidepropyltriethoxysilane; and the like. One type of these may be used alone, or two or more types of these may be used in combination.

In the case in which the PVA (A) is the modified PVA obtained by introducing the modifying group by acetalization, a modifying agent used for introducing the modifying group by acetalization is not particularly limited and is exemplified by linear, branched, cyclic saturated, cyclic unsaturated, or aromatic aldehyde or aldose having 1 to 19 carbon atoms. Specific examples include formaldehyde, acetaldehyde, propionyl aldehyde, n-butyl aldehyde, isobutyl aldehyde, tert-butyl aldehyde, benzaldehyde, cyclohexyl aldehyde, pentanal, hexanal, heptanal, octanal, nonanal, decanal, dodecanal, tetradecanal, hexadecanal, octadecanal, and the like. Furthermore, the modifying agent may have, for example, halogen and/or the like having been substituted for one or more hydrogen atom(s) of the modifying agent. The modifying agent may be used alone, or two or more types thereof may be used in combination.

In the case in which the PVA (A) is the modified PVA obtained by introducing the modifying group by esterification, a modifying agent used for introducing the modifying group by esterification is not particularly limited and is exemplified by linear, branched, cyclic saturated, cyclic unsaturated, or aromatic carboxylic acids each having 1 to 19 carbon atoms, and carboxylic acid derivatives each having 1 to 19 carbon atoms, such as carboxylic acid halides, vinyl esters, and fatty acids. Specific examples include acetic acid, propionic acid, butyric acid, valeric acid, caproic acid, enanthic acid, caprylic acid, pelargonic acid, capric acid, lauric acid, myristic acid, palmitic acid, margaric acid, stearic acid, or an acid chloride thereof, and the like. Furthermore, the modifying agent may have, for example, halogen and/or the like having been substituted for one or more hydrogen atom(s) of the modifying agent. The modifying agent may be used alone, or two or more types thereof may be used in combination.

The PVA (A) can be produced in accordance with a conventionally well-known procedure. For example, as a procedure for obtaining the vinyl ester polymer from the vinyl ester monomer, a bulk polymerization procedure, a solution polymerization procedure, a suspension polymerization procedure, an emulsion polymerization procedure, a dispersion polymerization procedure, or the like can be adopted. Among these, the solution polymerization procedure is industrially preferred.

In preparation of the vinyl ester polymer, a polymerization initiator may be used. The polymerization initiator may be selected from well-known initiators, depending on the polymerization method. Specific examples of the polymerization initiator include: azo type initiators such as 2,2'-azobisisobutyronitrile, 2,2'-azobis(2,4-dimethylvaleronitrile), and 2,2'-azobis(4-methoxy-2,4-dimethylvaleronitrile); percarbonate compounds such as diisopropyl peroxydicarbonate, di-2-ethylhexyl peroxydicarbonate, and diethoxyethyl peroxydicarbonate; perester compounds such as t-butyl peroxyneodecanate, α-cumyl peroxyneodecanate, and t-butyl peroxydecanate; acetylcyclohexylsulfonyl peroxide; peroxide type initiators such as 2,4,4-trimethylpentyl-2-peroxyphenoxyacetate; and the like.

The amount of the polymerization initiator may be predetermined ad libitum, depending on the type of the monomer and/or the initiator to be used, as well as an intended degree of polymerization and the like, and the amount of the polymerization initiator with respect to the total mass of the vinyl ester monomer is preferably 0.20 to 0.33% by mass.

In preparation of the vinyl ester polymer, a chain transfer agent may be used. The chain transfer agent may be selected from well-known chain transfer agents, depending on the polymerization process. Specific examples of the chain transfer agent include: aldehydes such as acetaldehyde and propionaldehyde; ketones such as acetone and methyl ethyl ketone; halogenated hydrocarbons such as trichloroethylene and perchloroethylene; and phosphinic acid salts such as sodium hypophosphite monohydrate. Among these, aldehydes and ketones are suitably used. The amount of the chain transfer agent is not particularly limited as long as it can be predetermined to give an intended degree of polymerization of

the vinyl ester polymer, depending on the chain transfer constant of the chain transfer agent to be added. Furthermore, a functional group may be introduced by using the chain transfer agent, a chain transfer agent having an alkyl group may be used to introduce an aliphatic hydrocarbon group to an end, or a chain transfer agent having a carboxy group may be used to introduce an ionic functional group to an end.

The polymerization conditions and the like may be predetermined ad libitum, depending on the type and the amount of the monomer to be used, desired physical properties, the polymerization method adopted, and the like. For example, the polymerization temperature is typically 0 to 150 °C, and preferably 20 to 120 °C.

A degree of polymerization in the vinyl ester polymer may be, for example, 20 to 95%. The degree of polymerization is preferably 30% or more, and more preferably 40% or more, taking into consideration an improvement of the yield, control of the degree of polymerization, and the like.

For the saponification reaction of the vinyl ester polymer obtained, an alcoholysis or hydrolysis reaction in which a basic catalyst such as sodium hydroxide, potassium hydroxide, or sodium methoxide, or an acidic catalyst such as p-toluenesulfonic acid, each being conventionally well-known, is used. Examples of the solvent used in the saponification reaction include: alcohols such as methanol and ethanol; esters such as methyl acetate and ethyl acetate; ketones such as acetone and methyl ethyl ketone; aromatic hydrocarbons such as benzene and toluene; and the like. One type of these may be used alone, or two or more types of these may be used in combination. Among these, for the saponification reaction, a procedure of performing a saponification reaction in the presence of sodium hydroxide that is a basic catalyst, by using, as a solvent, methanol or a mixed solution of methanol with methyl acetate is preferred.

The amount of the catalyst used in the saponification reaction may be predetermined ad libitum, depending on the type of the catalyst to be used, an intended degree of saponification, and the like. For example, in the case in which sodium hydroxide is used as the catalyst of the saponification reaction, in one mode of the present invention, a ratio (molar ratio) of the catalyst to the vinyl ester monomer in the vinyl ester copolymer is preferably 0.0015 to 0.0095.

Compound (B)

The compound (B) contained in the composition of the present invention is a compound represented by the following formula (1).

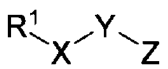 (1)

In the formula (1), X represents an oxygen atom, a group represented by the following formula (2), or a group represented by the following formula (3); Y represents an atomic group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group.

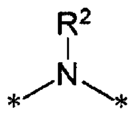 (2)

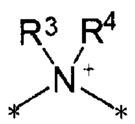 (3)

In the formula (2) and the formula (3), $R^2$, $R^3$, and $R^4$ each independently represent a hydrogen atom, an alkyl group having 1 to 3 carbon atoms, or an atomic bonding that bonds to Y; and * denotes an atomic bonding.

As described above, owing to, e.g., including in the compound (B) as X, an oxygen atom or a group that includes an electron attractive atom such as a nitrogen atom, it is possible to improve the homogeneity of the aqueous solution, and the separability of the PVA.

X represents preferably the group represented by the above formula (2), or the group represented by the above formula (3), and more preferably the group represented by the above formula (2). In the case in which X represents the group represented by the above formula (2), $R^2$ represents preferably a hydrogen atom or an alkyl group having 1 to 3 carbon atoms, more preferably a hydrogen atom, a methyl group, or an ethyl group, and still more preferably a methyl group. Further, in the case in which X represents the group represented by the above formula (3), $R^3$ and $R^4$ each independently represent preferably a hydrogen atom or an alkyl group having 1 to 3 carbon atoms, more preferably a hydrogen atom, a methyl group, or an ethyl group, and still more preferably a hydrogen atom or a methyl group.

Alternatively, X represents preferably a secondary amine, a tertiary amine, or a quaternary amine, and more preferably a secondary amine or a tertiary amine.

Y represents an atomic group having 1 to 10 carbon atoms, preferably an atomic group having 1 to 8 carbon atoms, and more preferably an atomic group having 1 to 5 carbon atoms. Further, Y may include an atom other than carbon. In the case in which Y includes an atom other than carbon, the atom other than carbon is not particularly limited, and is preferably at least one selected from the group consisting of oxygen, nitrogen, and hydrogen. Alternatively, Y and X may bond to form a ring structure. Here, in a case in which X represents a group represented by the above formula (2), $R^2$ represents an atomic bonding that bonds to Y, whereas in a case in which X represents a group represented by the above formula (3), at least one of $R^3$ and $R^4$ represents an atomic bonding that bonds to Y. It is to be noted that in one mode, Y and X preferably do not form a ring structure through bonding.

Alternatively, in a preferred one mode, Y preferably represents a substituted or unsubstituted hydrocarbon group. The hydrocarbon group which may be represented by Y is more preferably a hydrocarbon group having 1 to 5 carbon atoms, still more preferably a group represented by $-(CH_2)_n-$ (wherein n is an integer of 1 to 5), even more preferably a group represented by $-(CH_2)_n-$ (wherein n is an integer of 1 to 3), and particularly preferably a methylene group ($-CH_2-$) or an ethylene group ($-CH_2-CH_2-$). In a case in which Y represents a comparatively small group, X that includes an oxygen atom or a nitrogen atom, each being an electron attractive atom is positioned in the vicinity of Z, whereby the homogeneity of the aqueous solution and the separability of the PVA can be more improved. A part or all of hydrogen atoms of the hydrocarbon group which may be represented by Y may be substituted with a substituent. The substituent is preferably a carboxy group, a salt of a carboxy group, or an anion of a carboxy group.

Z represents preferably a salt of a carboxy group, a salt of a sulfo group, or a salt of a phosphoric acid group. Alternatively, in one mode, Z is also preferably a carboxy group, a salt of a carboxy group, or an anion of a carboxy group, and also more preferably a salt of a carboxy group. In particular, in a case in which the compound (B) is present in a solution, particularly in an aqueous solution, Z may represent an anion ($-COO^-$) of a carboxy group, an anion ($-SO_3^-$) of a sulfo group, or an anion ($-HPO_4^-$ or $-PO_4^{2-}$) of a phosphoric acid group. Further, in a case in which Z represents a sulfo group ($SO_3H-$) or a phosphoric acid group ($H_2PO_4-$), the compound (B) may be a phosphoric acid ester or a sulfonic acid ester.

In the case in which Z represents a salt of a carboxy group, a salt of a sulfo group, or a salt of a phosphoric acid group, the type of the salt is not particularly limited. Examples of the salt include: alkali metal salts of sodium, potassium, lithium, and the like; alkaline earth metal salts of calcium, magnesium, and the like; aluminum salts; zinc salts; ammonium salts; organic amine salts of monoethanolamine, diethanolamine, triethanolamine (TEA), triisopropanolamine, and the like; basic salts of arginine, lysine, and the like. The salt is preferably an alkali metal salt, and more preferably a sodium salt. For example, by adding an alkali or an aqueous solution thereof to the compound (B) that is a carboxylic acid, a sulfonic acid, or a phosphoric acid, the compound (B) that is a salt of the same can be obtained. For example, when an amine salt or an alkali metal salt of an N-(long-chain acyl)amino acid described later is to be obtained, an alkali or an aqueous solution thereof may be added to the N-(long-chain acyl)amino acid.

$R^1$ represents preferably an acyl group. In the case in which $R^1$ represents an acyl group, $R^1$ represents preferably a group represented by the following formula (4). Here, in the formula (4), $R^5$ represents a saturated or unsaturated hydrocarbon group having 7 to 20 carbon atoms, which may have a substituent.

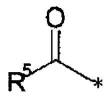
(4)

$R^5$ represents preferably a saturated or unsaturated hydrocarbon group having 7 to 20 carbon atoms, more preferably a linear saturated or unsaturated hydrocarbon group having 7 to 20 carbon atoms, still more preferably a linear saturated hydrocarbon group having 7 to 20 carbon atoms, and even more preferably a linear saturated hydrocarbon group having 9 to 13 carbon atoms. Furthermore, in one mode, the acyl group is preferably derived from coconut oil.

Further, in the case in which $R^1$ represents a hydrocarbon group, the hydrocarbon group is preferably a saturated or unsaturated hydrocarbon group having 7 to 21 carbon atoms, more preferably a linear saturated or unsaturated hydrocarbon group having 7 to 21 carbon atoms, and still more preferably a linear saturated hydrocarbon group having 7 to 21 carbon atoms. It is preferred that $R^1$ represents an n-octyl group, an n-decyl group, a lauryl group, or an n-tetradecyl group.

In one mode, the compound (B) is preferably a compound represented by the formula (1), wherein X represents the group represented by the above formula (2), and $R^1$ represents an acyl group. In one mode, it is more preferred that: X represents the group represented by the above formula (2); Y represents a hydrocarbon group having 1 to 5 carbon atoms; Z represents a salt of a carboxy group; $R^1$ represents a group represented by the formula (4); $R^2$ represents an alkyl group having 1 to 3 carbon atoms; and $R^5$ represents a linear saturated hydrocarbon group having 9 to 13 carbon atoms.

Further, in one mode, the compound (B) is preferably at least one selected from the group consisting of an acyl amino acid salt and an acyl lactic acid salt. The acyl amino acid salt is preferably an N-acyl amino acid salt. The N-acyl

amino acid salt preferably has an acyl group derived from a saturated or unsaturated fatty acid having 8 to 20 carbon atoms.

Further, in one mode, the compound (B) is preferably at least one selected from the group consisting of a phosphoric acid ester salt, an acyl amino acid salt, an acyl lactic acid salt, an acyl taurine salt, soap (a higher fatty acid), an alkyl sulfosuccinic acid salt, an acyl hydrolyzed collagen salt, and an acyl isethionic acid salt, more preferably at least one selected from the group consisting of an acyl lactic acid salt and an acyl amino acid salt, still more preferably an acyl amino acid salt, and even more preferably an N-acyl amino acid salt.

As the N-acyl amino acid salt, a salt of an N-acyl amino acid (hereinafter, may be referred to as "N-(long-chain acyl)amino acid salt") is preferred, which is obtained by introducing to an amino group of an amino acid, an acyl group derived from a saturated or unsaturated fatty acid having 8 to 20 carbon atoms. An amino acid residue of the N-acyl amino acid salt may be any of various types of amino acids, such as an $\alpha$-amino acid, a $\beta$-amino acid, a $\gamma$-amino acid, or a $\omega$-amino acid, and the amino group may be an N-methyl amino group or an N-ethyl amino group. Furthermore, the optical isomer, i.e., whether a D-form, an L-form, or a racemic form, is not restricted. Examples of the amino acid residue of the N-acyl amino acid salt include glutamic acid, aspartic acid, glycine, sarcosine, alanine, leucine, isoleucine, serine, threonine, cysteine, cystine, methionine, lysine, arginine, phenylalanine, tyrosine, histidine, tryptophan, proline, oxyproline, $\beta$-aminopropionic acid, $\gamma$-aminobutyric acid, anthranilic acid, m-aminobenzoic acid, p-aminobenzoic acid, lanthionine, $\beta$-methyllanthionine, cystathionine, djenkolic acid, felinine, aminomalonic acid, $\beta$-oxyaspartic acid, $\alpha$-amino-$\alpha$-methylsuccinic acid, $\beta$-oxyglutamic acid, $\gamma$-oxyglutamic acid, y-methylglutamic acid, $\gamma$-methylene glutamic acid, $\gamma$-methyl-$\gamma$-oxyglutamic acid, $\alpha$-aminoadipic acid, $\alpha,\alpha'$-diaminoadipic acid, $\beta,\beta'$-diaminoadipic acid, $\alpha$-amino-$\gamma$-oxyadipic acid, $\alpha$-aminopimelic acid, $\alpha$-amino-$\gamma$-oxypimelic acid, $\beta$-aminopimelic acid, $\alpha$-aminosuberic acid, $\alpha$-aminosebacic acid, and the like, and sarcosine is preferred.

The acyl group in the acyl lactic acid salt and the acyl amino acid salt is preferably one derived from the saturated or unsaturated fatty acid having 8 to 20 carbon atoms as described above, and as to whether linear, branched, cyclic is not restricted. Examples of the fatty acid include: linear fatty acids such as caprylic acid, pelargonic acid, capric acid, undecanoic acid, lauric acid, tridecanoic acid, myristic acid, pentadecanoic acid, palmitic acid, margaric acid, stearic acid, nonadecanoic acid, and arachic acid; branched fatty acids such as 2-butyl-5-methylpentanoic acid, 2-isobutyl-5-methylpentanoic acid, dimethyloctanoic acid, dimethylnonanoic acid, 2-butyl-5-methylhexanoic acid, methylundecanoic acid, dimethyldecanoic acid, 2-ethyl-3-methylnonanoic acid, 2,2-dimethyl-4-ethyloctanoic acid, methyldocosanoic acid, 2-propyl-3-methylnonanoic acid, methyltridecanoic acid, dimethyldodecanoic acid, 2-butyl-3-methylnonanoic acid, methyltetradecanoic acid, ethyltridecanoic acid, propyldodecanoic acid, butylundecanoic acid, pentyldecanoic acid, hexylnonanoic acid, 2-(3-methylbutyl)-3-methylnonanoic acid, 2-(2-methylbutyl)-3-methylnonanoic acid, butylethylnonanoic acid, methylpentadecanoic acid, ethyltetradecanoic acid, propyltridecanoic acid, butyldodecanoic acid, pentylundecanoic acid, hexyldecanoic acid, heptylnonanoic acid, dimethyltetradecanoic acid, butylpentylheptanoic acid, trimethyltridecanoic acid, methylhexadecanoic acid, ethylpentadecanoic acid, propyltetradecanoic acid, butyltridecanoic acid, pentyldodecanoic acid, hexylundecanoic acid, heptyldecanoic acid, methylheptylnonanoic acid, dipentylheptanoic acid, methylheptadecanoic acid, ethylhexadecanoic acid, ethylhexadecanoic acid, propylpentadecanoic acid, butyltetradecanoic acid, pentyltridecanoic acid, hexyldodecanoic acid, heptylundecanoic acid, octyldecanoic acid, dimethylhexadecanoic acid, methyloctylnonanoic acid, methyloctadecanoic acid, ethylheptadecanoic acid, dimethylheptadecanoic acid, methyloctyldecanoic acid, methylnonadecanoic acid, methylnonadecanoic acid, dimethyloctadecanoic acid, and butylheptylnonanoic acid; linear monoenoic acids such as octenoic acid, nonenoic acid, decenoic acid, caproleic acid, undecylenic acid, linderic acid, obtusilic acid, lauroleic acid, tridecenoic acid, tsuzuic acid, myristoleic acid, pentadecenoic acid, hexadecenoic acid, palmitoleic acid, heptadecenoic acid, octadecenoic acid, oleic acid, nonadecenoic acid, and gondoic acid; branched monoenoic acids such as methylheptenoic acid, methylnonenoic acid, methylundecenoic acid, dimethyldecenoic acid, methyldodecenoic acid, methyltridecenoic acid, dimethyldodecenoic acid, dimethyltridecenoic acid, methyloctadecenoic acid, dimethylheptadecenoic acid, and ethyloctadecenoic acid; dienoic or trienoic acids such as linoleic acid, linoelaidic acid, eleostearic acid, linolenic acid, linolenelaidic acid, pseudoeleostearic acid, parinaric acid, and arachidonic acid; acetylenic acids such as octynoic acid, nonynoic acid, decynoic acid, undecynoic acid, dodecynoic acid, tridecynoic acid, tetradecynoic acid, pentadecynoic acid, heptadecynoic acid, octadecynoic acid, nonadecynoic acid, and dimethyloctadecynoic acid; and cyclic acids such as methylene octadecenoic acid, methylene octadecanoic acid, aleprolic acid, aleprestic acid, aleprylic acid, alepric acid, hydnocarpic acid, chaulmoogric acid, gorlic acid, $\alpha$-cyclopentyl acid, $\alpha$-cyclohexyl acid, and $\alpha$-cyclopentylethyl acid, from which the acyl group is derived, and lauric acid is preferred. Alternatively, the acyl group may be derived from a fatty acid obtained from a natural fat or oil, and is preferably an acyl group derived from mixed fatty acids containing 80% or more saturated or unsaturated fatty acid(s) having 8 to 20 carbon atoms descried above. Examples include acyl groups derived from coconut oil fatty acids, palm oil fatty acids, linseed oil fatty acids, sunflower oil fatty acids, soybean oil fatty acids, sesame-seed oil fatty acids, castor oil fatty acids, olive oil fatty acids, or camellia oil fatty acids.

In the case in which the compound (B) is the acyl amino acid salt, examples of preferred acyl amino acid salt include sodium cocoyl glutamate, TEA-cocoyl glutamate, potassium cocoyl glutamate, sodium lauroyl glutamate, TEA-lauroyl glutamate, potassium lauroyl glutamate, sodium cocoyl sarcosinate, TEA-cocoyl sarcosinate, potassium cocoyl sarcosinate, sodium lauroyl sarcosinate, TEA-lauroyl sarcosinate, potassium lauroyl sarcosinate, sodium cocoyl aspartate, TEA-cocoyl aspartate, potassium cocoyl aspartate, sodium lauroyl aspartate, TEA-lauroyl aspartate, potassium lauroyl aspartate, sodium cocoyl methyl alaninate, TEA-cocoyl methyl alaninate, potassium cocoyl methyl alaninate, sodium lauroyl methyl alaninate, TEA-lauroyl methyl alaninate, potassium lauroyl methyl alaninate, sodium cocoyl glycinate, TEA-cocoyl glycinate, potassium cocoyl glycinate, sodium lauroyl glycinate, TEA-lauroyl glycinate, potassium lauroyl glycinate, sodium myristoyl sarcosinate, TEA-myristoyl sarcosinate, potassium myristoyl sarcosinate, sodium lauroyl methyl-β-alaninate, TEA-lauroyl methyl-β-alaninate, potassium lauroyl methyl-β-alaninate, sodium cocoyl methyl-β-alaninate, TEA-cocoyl methyl-β-alaninate, potassium cocoyl methyl-β-alaninate, and the like, and sodium lauroyl sarcosinate is more preferred.

In the case in which the compound (B) is the acyl lactic acid salt, examples of preferred acyl lactic acid salt include sodium cocoyl lactate, TEA-cocoyl lactate, potassium cocoyl lactate, sodium lauroyl lactate, TEA-lauroyl lactate, potassium lauroyl lactate, sodium stearoyl lactate, TEA-stearoyl lactate, potassium stearoyl lactate, sodium isostearoyl lactate, TEA-isostearoyl lactate, potassium isostearoyl lactate, and the like.

Furthermore, in one mode, the compound (B) is preferably at least one selected from the group consisting of an acid having an acid dissociation constant (pKa) in water of 0 or more and 6.0 or less, a salt thereof, and an anion thereof. The lower limit of the pKa is preferably 0, more preferably 1.0, and still more preferably 1.5. Further, the upper limit of the pKa is preferably 6.0, more preferably 5.5, and still more preferably 5.0. When the compound (B) is an acid having a pKa falling within the above range, or a salt thereof, solubility of the PVA (A) in the composition being in the form of an aqueous solution containing the PVA (A) and the compound (B) may be more superior, and separation of the PVA (A) in the aqueous solution under weakly acidic conditions may be more superior.

The composition of the present invention may contain two or more types of the compound (B) described above.

The composition of the present invention may consist only of the PVA (A) and the compound (B), or may further contain other component(s) aside from the PVA (A) and the compound (B). The other component is exemplified by polymers other than the PVA (A), surfactants other than the compound (B), solvents such as water, and the like. Furthermore, optional components which can be contained in the composition for each intended usage described later may also be involved in the other component(s). The composition may be a liquid, may be slurry, or may be a solid such as powder or a film. The lower limit of a total content of the PVA (A) and the compound (B) in the composition may be 1% by mass, or may be 5% by mass, 10% by mass, 20% by mass, 30% by mass, 40% by mass, 50% by mass, 60% by mass, 70% by mass, 80% by mass, 90% by mass, 95% by mass, 97% by mass, or 99% by mass. The upper limit of the total content of the PVA (A) and the compound (B) in the composition may be 100% by mass, or may be 99% by mass, 95% by mass, 90% by mass, 80% by mass, 70% by mass, 60% by mass, 50% by mass, 40% by mass, 30% by mass, 20% by mass, 10% by mass, or 5% by mass.

The composition of the present invention may be, as described later, an aqueous solution containing water as the other component. The lower limit of a total content of the PVA (A), the compound (B), and water in the composition is preferably 70% by mass, more preferably 80% by mass, and still more preferably 90% by mass, or may be 95% by mass, 97% by mass, 99% by mass, or 99.9% by mass. The upper limit of the total content of the PVA (A), the compound (B), and water in the composition may be 100% by mass, or may be 99.9% by mass or 99% by mass. In the case in which the composition is an aqueous solution, the content of the PVA (A) may be, for example, 1% by mass or more and 40% by mass or less, may be 5% by mass or more and 35% by mass or less, or may be 10% by mass or more and 30% by mass or less.

The composition of the present invention may substantially consist only of the PVA (A) and the compound (B). An aqueous solution containing such a composition and water, a mixture of such a composition and other component(s), and the like are also suitable one mode of the present invention. The mixture involves also an aqueous solution and the like.

Intended usages

One embodiment of the composition of the present invention is at least one composition selected from the group consisting of a composition for agricultural supplies, a composition for automotive supplies, a composition for aeronautical supplies, a composition for industrial supplies, a composition for livestock supplies, a composition for marine supplies, a pharmaceutical composition, a composition for personal care goods, a composition for recreational goods, and a composition for water treatment agents.

The term "agricultural supplies" as referred to herein means supplies and materials used in agriculture and horticulture. Typical composition for agricultural supplies is exemplified by agrochemical compositions, and examples thereof include insecticides, fungicides, insecticidal fungicides, herbicides, rodenticides, plant growth regulators, attractants, spreaders, repellents, defoliants, fertilizers, trace element and micronutrient agents, and the like.

In the case in which the composition is the agrochemical composition, the composition may contain, in addition to the PVA (A) and the compound (B), a medium such as water, as well as active ingredient(s) for imparting desired action(s) and/or function(s). The active ingredient is exemplified by insecticides, herbicides, and the like.

The term "automotive supplies" as referred to herein means supplies and materials used in the automotive industry. Examples of the composition for automotive supplies include car wash detergents, windshield washer fluids, and the like.

The term "aeronautical supplies" as referred to herein means supplies and materials used in the aeronautical industry. Examples of the composition for aeronautical supplies include airframe cleaners and the like.

The term "industrial supplies" as referred to herein means supplies and materials used in the manufacturing industry. Examples of the composition for industrial supplies include machine cleaning agents, dispersants for polymerization of vinyl compounds, and the like. Preferred dispersants for polymerization of vinyl compounds include dispersants for suspension polymerization of vinyl chloride.

The term "livestock supplies" as referred to herein means supplies and materials used in dairy and livestock farming. The composition for livestock supplies is exemplified by barn cleaners, agricultural equipment cleaners, and the like.

The term "marine supplies" as referred to herein means supplies and materials used in fishing, fisheries, shipbuilding, ocean exploration, and the like. Examples of the composition for marine supplies include ship cleaning agents, ship equipment cleaning agents, marine processing equipment cleaning agents, and the like.

Pharmaceutical compositions include pharmaceuticals, quasi-drugs, and the like.

The term "personal care goods" as referred to herein means goods that can be applied to bodies of humans or animals other than humans. It is to be noted that the "body" referred to herein includes skin, teeth, nails, and hair. Examples of the personal care goods include cosmetics, shampoos, body washes, facial cleansers, toothpastes, and the like.

In the case in which the composition is the personal care goods, the composition may contain, in addition to the PVA (A) and the compound (B), for example, water, a thickening agent, a flavoring ingredient, a colorant, a dispersant, a scrubbing agent, an emulsifying agent, a moisturizer, a bleaching agent, etc.

The term "recreational goods" as referred to herein means goods and materials used in recreation. Examples of the composition for recreational goods include foam sprays, bath additives, foaming agents for pools, and the like.

The term "water treatment agents" as referred to herein means agents used by addition to water or a liquid containing water as a principal component (containing at least 50% by mass water with respect to a total mass) for the purpose of preventing generation of microorganisms, preventing corrosion, preventing scale, and the like. Examples of the composition for water treatment agents include water treatment agents for water supply, industrial water treatment agents, sewage treatment agents, industrial wastewater treatment agents, swimming pool water purification agents, and the like.

In the case in which the composition is the composition for water treatment agents, the composition may contain, in addition to the PVA (A) and the compound (B), a medium such as water, as well as a polymer coagulant and/or an inorganic coagulant composed of a water soluble (co)polymer having a water soluble monomer as a constituent unit, and the like.

Aqueous Solution

The composition of the present invention may be an aqueous solution further containing water. Such an aqueous solution is an aqueous solution in which the PVA (A), which is poorly soluble in water and is difficult to dissolve in water alone, is solubilized in water by way of the action of the compound (B). Conventionally, it has been difficult to separate and extract a dissolved PVA from an aqueous PVA solution once prepared, as it requires use of a large amount of a salt and a poor solvent. In the present invention, since the solubilizing ability of the compound (B) decreases under weakly acidic conditions, it is possible to separate at least a part of the PVA (A) contained in the aqueous solution from the aqueous solution by placing the aqueous solution (composition) under weakly acidic conditions.

It is preferred that the aqueous solution (composition) can be separated into two phases, a transparent supernatant liquid and a resin precipitate, in a case in which the pH of the aqueous solution is adjusted to 3.0 at a normal temperature. Such an aqueous solution is easier to filter out the PVA (A) contained in the aqueous solution. The mass of the resin precipitate after drying the resin precipitate obtained by filtration at 105 °C for 24 hours is preferably 70% by mass or more with respect to the PVA (A) originally contained in the aqueous solution.

In a state before the operation to separate the PVA (A) contained in the aqueous solution, i.e., a state in which the PVA (A) and the compound (B) are dissolved in water, the aqueous solution as the composition of the present invention is preferably a transparent and homogeneous liquid at normal temperature. The aqueous solution as the composition of the present invention has a pH of preferably 4.0 to 11.0, may be 5.0 to 10.0, may be 5.5 to 9.0, or may be 6.0 to 8.0.

Method for Separating Vinyl Alcohol Polymer

The method for separating a vinyl alcohol polymer of the present invention is a method including: adjusting a pH of the above-described composition that is an aqueous solution to precipitate at least a part of the PVA (A) contained in the aqueous solution (composition). In one mode, it is preferred that the pH of the aqueous solution is adjusted to 3.0 or less to

precipitate a resin precipitate containing the PVA (A). Furthermore, it is preferred that the mass of the resin precipitate after drying the filtered resin precipitate at 105 °C for 24 hours accounts for 70% by mass or more of the PVA (A) originally contained in the aqueous solution.

## EXAMPLES

Hereinafter, the present invention is described in more detail by way of Examples, but the present invention is not in any way limited by the Examples.

In the following, the RT, the viscosity-average degree of polymerization, and the degree of saponification of the PVA (A) in the composition were measured and calculated for compositions used in Examples and Comparative Examples in accordance with methods described below.

### Retention Time RT of PVA

The retention time RT of the PVA is a retention time of the peak top as measured on reversed-phase partition gradient high-performance liquid chromatography with an ion exchanged water/ ethanol liquid mixture as the eluent. The measurement was conducted under the following conditions. It is to be noted that the "peak top" is a point at which the detection strength is maximum and exhibits a maximal value, in a chromatogram obtained by the chromatographic determination.

### Measurement Conditions

column: Shimpack G-ODS (4) (manufactured by Shimadzu Corporation, octadecyl group-modified spherical fully porous silica gel; inner diameter of 4 mm × length of 10 mm; particle diameter: 5 μm)
column temperature: 45 °C
eluent: a liquid mixture of ion exchanged water (X) and ethanol (purity: 99.5%) (Y)
eluent constitution for each measurement time;

- 0 to 5 min: concentration of (Y) being 5% by volume, constant
- 5 to 25 min: concentration of (Y) being 5 to 100% by volume
- 25 to 40 min: concentration of (Y) being 100% by volume, constant
- 40 to 41 min: concentration of (Y) being 100 to 5% by volume
- 41 to 55 min: concentration of (Y) being 5% by volume, constant

(The concentration of (Y) from 5 min to 25 min was gradually increased from 5% by volume to 100% by volume at a substantially constant rate. The concentration of (Y) from 40 to 41 min was gradually decreased from 100% by volume to 5% by volume at a substantially constant rate.)

mobile phase flow rate: 0.4 mL/min
sample concentration: 5 mg/mL
detector: ELSD-LTII (manufactured by Shimadzu Corporation, drift tube temperature of 40 °C; gain 6 (= 32 times); $N_2$ gas primary spray pressure of 0.4 Mpa and secondary spray pressure of 0.35 Mpa; data acquisition interval of 1,000 m sec; filter: 1 sec.)
injection amount: 5 μL
length from injection to column inlet: 900 mm
length from column outlet to nebulizer of ELSD-LTII detector: 1,375 mm
pipe diameter: 0.3 mm ID

### Viscosity-Average Degree of Polymerization of PVA

The viscosity-average degree of polymerization of the PVA was determined in accordance with JIS K6726: 1994. Specifically, in a case in which the PVA has a degree of saponification of less than 99.5 mol%, saponification was conducted until the degree of saponification became 99.5 mol% or more, and the PVA thus obtained was subjected to determination of the viscosity-average degree of polymerization by the following equality, using an intrinsic viscosity [η] (liter/g) measured in water at 30 °C.

$$\text{viscosity-average degree of polymerization} = ([\eta] \times 10^4/8.29)^{(1/0.62)}$$

Degree of Saponification of PVA

The degree of saponification (mol%) of the PVA was measured in accordance with JIS K 6726: 1994.

Production Example 1

Into a 3 L reaction tank equipped with a stirrer, a nitrogen feed port, an additive feed port, and an initiator addition port, 480 g of vinyl acetate and 1,120 g of methanol were charged and after the temperature was elevated to 60 °C, the interior of the system was substituted with nitrogen by nitrogen bubbling for 30 min. The inner temperature of the reaction tank was adjusted to 60 °C and 1.2 g of 2,2'-azobis(4-methoxy-2,4-dimethylvaleronitrile) was added thereto to start polymerization. During the polymerization, the polymerization temperature of 60 °C was maintained, and after 5 hours when the degree of polymerization reached 70%, the polymerization was stopped by cooling. Next, unreacted vinyl acetate was eliminated under reduced pressure to give a solution of polyvinyl acetate in methanol. Saponification was allowed by adding a solution of NaOH in methanol (concentration of 10% by mass) to the solution of polyvinyl acetate in methanol adjusted to 30% such that an alkali molar ratio (number of moles of NaOH/ number of moles of vinyl ester unit in polyvinyl acetate) became 0.0025, whereby PVA 1 as PVA (A) was obtained. The degree of saponification, the viscosity-average degree of polymerization, and the retention time RT of thus obtained PVA 1 are shown in Table 1.

Production Example 2

Into a 3 L reaction tank equipped with a stirrer, a nitrogen feed port, an additive feed port, and an initiator addition port, 1,284 g of vinyl acetate, 316 g of methanol, and 0.107 g of 3-mercaptopropionic acid were charged and after the temperature was elevated to 60 °C, the interior of the system was substituted with nitrogen by nitrogen bubbling for 30 min. The inner temperature of the reaction tank was adjusted to 60 °C and 4.58 g of methanol containing 0.51 g of 2,2'-azobis(4-methoxy-2,4-dimethylvaleronitrile) was added thereto to start polymerization. Immediately, 23.30 g of methanol containing 2.33 g of 3-mercaptopropionic acid was homogeneously added thereto over 4 hours. During the polymerization, the polymerization temperature of 60 °C was maintained, and after 4 hours when the degree of polymerization reached 65%, the polymerization was stopped by cooling. Next, unreacted vinyl acetate was eliminated under reduced pressure to give a solution of polyvinyl acetate in methanol. Saponification was allowed by adding a solution of NaOH in methanol (concentration of 10% by mass) to the solution of polyvinyl acetate in methanol adjusted to 50% such that an alkali molar ratio (number of moles of NaOH/ number of moles of vinyl ester unit in polyvinyl acetate) became 0.009, whereby PVA 2 as PVA (A) was obtained. The degree of saponification, the viscosity-average degree of polymerization, and the retention time RT of thus obtained PVA 2 are shown in Table 1.

Production Example 3

Into a 3 L reaction tank equipped with a stirrer, a nitrogen feed port, an additive feed port, and an initiator addition port, 720 g of vinyl acetate and 880 g of methanol were charged and after the temperature was elevated to 60 °C, the interior of the system was substituted with nitrogen by nitrogen bubbling for 30 min. The inner temperature of the reaction tank was adjusted to 60 °C and 1.2 g of 2,2'-azobis(4-methoxy-2,4-dimethylvaleronitrile) was added thereto to start polymerization. During the polymerization, the polymerization temperature of 60 °C was maintained, and after 5 hours when the degree of polymerization reached 70%, the polymerization was stopped by cooling. Next, unreacted vinyl acetate was eliminated under reduced pressure to give a solution of polyvinyl acetate in methanol. Saponification was allowed by adding a solution of NaOH in methanol (concentration of 10% by mass) to the solution of polyvinyl acetate in methanol adjusted to 30% such that an alkali molar ratio (number of moles of NaOH/ number of moles of vinyl ester unit in polyvinyl acetate) became 0.0037, whereby PVA 3 was obtained. The degree of saponification, the viscosity-average degree of polymerization, and the retention time RT of thus obtained PVA 3 are shown in Table 1.

Table 1

| | Degree of saponification (mol%) | Viscosity-average degree of polymerization | RT (min) |
|---|---|---|---|
| PVA 1 | 50 | 250 | 23 |
| PVA 2 | 40 | 250 | 24 |
| PVA 3 | 75 | 500 | 21 |

Compound (B)

Surfactants used in Examples and Comparative Examples, as the compound (B), are shown in Table 2.

Table 2

| | Designation of component | Category |
|---|---|---|
| surfactant 1 ("SOYPON SLP") | sodium lauroyl sarcosinate | anionic |
| surfactant 2 ("Aminosurfact ACDS-L") | sodium cocoyl glutamate | anionic |
| surfactant 3 ("ALANON ALE") | sodium lauroyl methyl alaninate | anionic |
| surfactant 4 ("EMAL 10G") | sodium lauryl sulfate | anionic |
| surfactant 5 ("QUARTAMIN 86P CONC.") | stearyl trimethyl ammonium chloride | cationic |
| surfactant 6 ("EMULGEN 150") | Polyoxyethylene (47) lauryl ether | nonionic |

Example 1

To 79 parts by mass of ion exchanged water were added 20 parts by mass of PVA 1 and as a surfactant, 1 part by mass of "SOYPON SLP" (manufactured by Kawaken Fine Chemicals Co., Ltd., where "SOYPON" is a registered trademark.), being the above-described surfactant 1, and heating with stirring of the mixture gave an aqueous solution, being the composition.

Example 2

To 76 parts by mass of ion exchanged water were added 20 parts by mass of PVA 1 and as a surfactant, 4 parts by mass of "Aminosurfact ACDS-L" (manufactured by Asahi Kasei Finechem Co., Ltd., active ingredient: 25%, where "Aminosurfact" is a registered trademark.), being the above-described surfactant 2, and heating with stirring of the mixture gave an aqueous solution, being the composition.

Example 3

To 67.6 parts by mass of ion exchanged water were added 30 parts by mass of PVA 1 and as a surfactant, 2.4 parts by mass of "ALANON ALE" (manufactured by Kawaken Fine Chemicals Co., Ltd., active ingredient: 30%, where "ALANON" is a registered trademark.), being the above-described surfactant 3, and heating with stirring of the mixture gave an aqueous solution, being the composition.

Example 4

To 79 parts by mass of ion exchanged water were added 20 parts by mass of PVA 2 and as a surfactant, 1 part by mass of "SOYPON SLP" (manufactured by Kawaken Fine Chemicals Co., Ltd.), being the above-described surfactant 1, and heating with stirring of the mixture gave an aqueous solution, being the composition.

Comparative Example 1

An aqueous solution, being the composition, was obtained similarly to Example 1, except that PVA used was changed to PVA 3.

Comparative Example 2

An aqueous solution, being the composition, was obtained similarly to Example 1, except that the surfactant was changed to "EMAL 10G" (manufactured by Kao Corporation, where "EMAL" is a registered trademark.), being the above-described surfactant 4.

Comparative Example 3

An aqueous solution, being the composition, was obtained by: adding 20 parts by mass of PVA 1 to 80 parts by

mass of ion exchanged water; and heating with stirring the mixture.

Comparative Example 4

To 78.4 parts by mass of ion exchanged water were added 20 parts by mass of PVA 1 and as a surfactant, 1.6 parts by mass of "QUARTAMIN 86P CONC." (manufactured by Kao Corporation, active ingredient: 63%, where "QUARTAMIN" is a registered trademark.), being the above-described surfactant 5, and heating with stirring of the mixture gave an aqueous solution, being the composition.

Comparative Example 5

An aqueous solution, being the composition, was obtained similarly to Example 1, except that the surfactant was changed to "EMULGEN 150" (manufactured by Kao Corporation, where "EMULGEN" is a registered trademark.), being the above-described surfactant 6.

Evaluation of Liquid State of Aqueous Solution

On each aqueous solution thus obtained, the state of the liquid at a normal temperature was visually observed. The aqueous solution was assessed as: "homogeneous" in a case in which the composition became a transparent and homogeneous liquid; or "separated" in a case in which the composition was separated into two or more phases, or was suspended.

Evaluation of Separability upon Addition of Acid

Among the aqueous solutions prepared, compositions assessed as "homogeneous" in the above "Evaluation of Liquid State of Aqueous Solution" were subjected to an evaluation of separability upon addition of an acid. After adjusting a liquid pH of the aqueous solution, as a subject, to 3.0 by adding 0.25 mol/L sulfuric acid, the state of the aqueous solution at a normal temperature was visually observed. In this procedure, the aqueous solution was assessed as: "A" in a case in which the aqueous solution immediately separated into two phases of a transparent supernatant liquid and a resin precipitate, whereby filtering out the resin precipitate was enabled; or "B" in a case in which the composition did not separate into a transparent supernatant liquid phase and a resin precipitate phase, whereby filtering out the resin precipitate was impossible. It is to be noted that the phrase "the case in which filtering out the resin precipitate was enabled" as referred to herein means a case in which a mass of the resin precipitate, with respect to the PVA originally contained in the composition, was 70% by mass or more after the resin precipitate obtained by filtering was dried at 105 °C for 24 hours. It is to be noted that the pH of the aqueous solution was measured by using a pH meter (F-51, manufactured by HORIBA, Ltd.).

In regard to Example 1 and Comparative Examples 1 to 5, results of the evaluation of liquid state of the aqueous solution, and results of the evaluation of separability upon addition of acid are summarized in Table 3. The aqueous solution of Example 1 was a transparent and homogeneous aqueous solution, and separation of the PVA was possible under a weakly acidic condition.

Table 3

| | PVA | Surfactant | State of liquid | Separability upon addition of acid |
|---|---|---|---|---|
| Example 1 | PVA 1 | surfactant 1 | homogeneous | A |
| Example 2 | PVA 1 | surfactant 2 | homogeneous | A |
| Example 3 | PVA 1 | surfactant 3 | homogeneous | A |
| Example 4 | PVA 2 | surfactant 1 | homogeneous | A |
| Comparative Example 1 | PVA 3 | surfactant 1 | homogeneous | B |
| Comparative Example 2 | PVA 1 | surfactant 4 | homogeneous | B |
| Comparative Example 3 | PVA 1 | - | separated | - |
| Comparative Example 4 | PVA 1 | surfactant 5 | separated | - |
| Comparative Example 5 | PVA 1 | surfactant 6 | separated | - |

## Claims

1. A composition comprising:

a vinyl alcohol polymer (A) that exhibits a retention time RT of a peak top of 22 min or more, as measured on reversed-phase partition gradient high-performance liquid chromatography with a water-ethanol eluent; and a compound (B), wherein the compound (B) is a compound represented by formula (1):

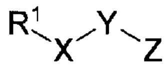 (1)

wherein,
in the formula (1), X represents an oxygen atom, a group represented by formula (2), or a group represented by formula (3); Y represents an atomic group having 1 to 10 carbon atoms; Z represents one selected from the group consisting of a carboxy group, a sulfo group, a phosphoric acid group, a salt thereof, and an anion thereof; and $R^1$ represents an acyl group or a hydrocarbon group,

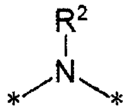 (2)

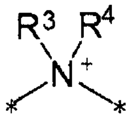 (3)

in the formula (2) and the formula (3), $R^2$, $R^3$, and $R^4$ each independently represent a hydrogen atom, an alkyl group having 1 to 3 carbon atoms, or an atomic bonding that bonds to Y; and * denotes an atomic bonding.

2. The composition according to claim 1, wherein as for the compound (B), Z in the formula (1) represents a carboxy group, a salt of a carboxy group, or an anion of a carboxy group.

3. The composition according to claim 1, wherein as for the compound (B), X in the formula (1) represents a group represented by the formula (2), and $R^1$ represents an acyl group.

4. The composition according to claim 1, wherein the compound (B) is at least one selected from the group consisting of an N-acyl amino acid salt and an acyl lactic acid salt.

5. The composition according to claim 4, wherein the compound (B) is the N-acyl amino acid salt.

6. The composition according to claim 5, wherein the N-acyl amino acid salt has an acyl group derived from a saturated or unsaturated fatty acid having 8 to 20 carbon atoms.

7. The composition according to claim 1, wherein in the compound (B), $R^1$ represents a group represented by formula (4):

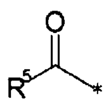 (4)

wherein, in the formula (4), $R^5$ represents a saturated or unsaturated hydrocarbon group having 7 to 20 carbon atoms which may have a substituent; and * denotes an atomic bonding.

8. The composition according to claim 1, wherein the vinyl alcohol polymer (A) has a degree of saponification of 20 mol% or more and 70 mol% or less.

9. The composition according to claim 1, wherein the vinyl alcohol polymer (A) consists only of a monomer unit derived

from vinyl acetate.

**10.** The composition according to claim 1, which is at least one selected from the group consisting of a composition for agricultural supplies, a composition for automotive supplies, a composition for aeronautical supplies, a composition for industrial supplies, a composition for livestock supplies, a composition for marine supplies, a pharmaceutical composition, a composition for personal care goods, a composition for recreational goods, and a composition for water treatment agents.

**11.** The composition according to any one of claims 1 to 10, which is an aqueous solution further comprising water.

**12.** A method for separating a vinyl alcohol polymer, the method comprising: adjusting a pH of the composition according to claim 11 to precipitate at least a part of the vinyl alcohol polymer (A) comprised in the composition.

## INTERNATIONAL SEARCH REPORT

International application No.
**PCT/JP2024/007544**

### A. CLASSIFICATION OF SUBJECT MATTER

***C08L 29/04***(2006.01)i
FI: C08L29/04 A

According to International Patent Classification (IPC) or to both national classification and IPC

### B. FIELDS SEARCHED

Minimum documentation searched (classification system followed by classification symbols)

C08L29/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2009-161667 A (MATSUMOTO YUSHI-SEIYAKU CO., LTD.) 23 July 2009 (2009-07-23) | 1-12 |
| A | WO 2011/132592 A1 (KURARAY CO., LTD.) 27 October 2011 (2011-10-27) | 1-12 |
| A | JP 2004-285144 A (JAPAN VAM & POVAL CO., LTD.) 14 October 2004 (2004-10-14) | 1-12 |
| A | WO 2019/159756 A1 (KURARAY CO., LTD.) 22 August 2019 (2019-08-22) | 1-12 |
| A | JP 6-88002 A (KAO CORPORATION) 29 March 1994 (1994-03-29) | 1-12 |
| A | JP 2001-246838 A (KONICA CORP.) 11 September 2001 (2001-09-11) | 1-12 |
| A | 斎藤修二, 高分子物質と界面活性剤との複合体, 油化学, 1963, vol. 12, no. 3, pp. 133-141, (SAITO, Shuji. Complexes of Polymers and Surfactants. Journal of Japan Oil Chemists' Society.) p. 139, 4-3-2 | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/007544

C. DOCUMENTS CONSIDERED TO BE RELEVANT

| Category* | Citation of document, with indication, where appropriate, of the relevant passages | Relevant to claim No. |
|---|---|---|
| P, A | WO 2023/249012 A1 (KURARAY CO., LTD.) 28 December 2023 (2023-12-28) | 1-12 |

Form PCT/ISA/210 (second sheet) (July 2022)

**INTERNATIONAL SEARCH REPORT**
**Information on patent family members**

International application No.
**PCT/JP2024/007544**

| Patent document cited in search report | Publication date (day/month/year) | Patent family member(s) | Publication date (day/month/year) |
|---|---|---|---|
| JP 2009-161667 A | 23 July 2009 | (Family: none) | |
| WO 2011/132592 A1 | 27 October 2011 | CN 102834439 A<br>KR 10-2013-0051934 A<br>TW 201141882 A | |
| JP 2004-285144 A | 14 October 2004 | (Family: none) | |
| WO 2019/159756 A1 | 22 August 2019 | TW 201936658 A | |
| JP 6-88002 A | 29 March 1994 | (Family: none) | |
| JP 2001-246838 A | 11 September 2001 | (Family: none) | |
| WO 2023/249012 A1 | 28 December 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 53133252 A


### Non-patent literature cited in the description


- Complexes of Polymers and Surfactants. *Journal of Oleo Science*, 1963, vol. 12 (3), 133-141